(19)

Europäisches
Patentamt
European
Patent Office
Office européen
des brevets

(11) **EP 2 030 949 A1**

(12) **EUROPEAN PATENT APPLICATION**
published in accordance with Art. 153(4) EPC

(43) Date of publication:
**04.03.2009 Bulletin 2009/10**

(21) Application number: **06796387.6**

(22) Date of filing: **11.08.2006**

(51) Int Cl.:
***C01B 37/02*** (2006.01)    ***C01B 33/12*** (2006.01)

(86) International application number:
**PCT/JP2006/315949**

(87) International publication number:
**WO 2007/020894 (22.02.2007 Gazette 2007/08)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **12.08.2005 JP 2005234777**
**29.11.2005 JP 2005344421**

(71) Applicant: **SHISEIDO COMPANY, LTD.**
**Tokyo 104-8010 (JP)**

(72) Inventors:
• **TAKAHASHI, Shun**
  **Kanagawa; 2248558 (JP)**
• **SAKAMOTO, Kazutami**
  **Kanagawa;2248558 (JP)**
• **HIWATARI, Kouzou**
  **Kanagawa;2160003 (JP)**

(74) Representative: **Henkel, Feiler & Hänzel**
**Patentanwälte**
**Maximiliansplatz 21**
**80333 München (DE)**

(54) **MESOPOROUS SILICA AND METHOD FOR PRODUCTION THEREOF**

(57)     The object of the present invention is to provide a production method of mesoporous silica under electrolyte-free conditions by using a surfactant aggregate structure as a template and to provide mesoporous silica with a new shape, which could not be obtained in the past. It is possible to prepare mesoporous silica under electrolyte-free conditions by reacting a nonionic surfactant and a water-soluble silicate monomer with a specific structure under neutral conditions. In addition, a sheet-like mesoporous silica can be prepared in the use of a nonionic surfactant that can form a ribbon phase or a nematic phase in suitable temperature and concentration ranges in a water solution.

Fig. 4

**Description**

RELATED APPLICATIONS

This application claims the priority of Japanese Patent Application No. 2005-234777 filed on August 12, 2005 and Japanese Patent Application No. 2005-344421 filed on November 29, 2005, which are incorporated herein by reference.

FIELD OF THE INVENTION

The present invention relates to mesoporous silica and the production method thereof, and in particular, relates to the improvement of the production method of mesoporous silica by using a surfactant aggregate structure as a template and also relates to sheet-like mesoporous silica that can be obtained thereby.

BACKGROUND OF THE INVENTION

Porous material is usually classified, according to the pore size, to a microporous material, which is 2 nm or less, a mesoporous material, which is 2 to 50 nm, and a macroporous material, which is 50 nm or more. Mesoporous silica, which is produced by a template method using a surfactant micelle template, has a high specific surface area and uniform fine pore sizes. Because of its structural characteristics, mesoporous silica is applied in various fields. Up to now, various synthesis methods of mesoporous silica with the use of various surfactants have been established (refer to patent literature 1 and non-patent literatures 1 to 4 listed below). Nonionic surfactants easily form self-assembled aggregates such as micelles and liquid crystals under electrolyte-free conditions; therefore, it is possible, in principle, to form electrolyte-free mesoporous silica using a nonionic surfactant as a template. Thus, the application to electronic materials and to the products in which ionic impurities are detrimental can be expected.

However, the silicate monomer alkoxysilane (silicon alkoxide), which has been used in the template method in the past, is an oil-soluble material. Under neutral conditions, the hydrolysis of alkoxy groups is difficult. In actual use, a lower alcohol is added as a solubilizing agent, as necessary, under acidic or basic conditions to promote hydrolysis, namely, to form silanol groups, which are condensable functional groups. For example, the self-condensation of an inorganic silicate monomer such as water glass, colloidal silica, fumed silica, or precipitated silica easily takes place under neutral conditions. Therefore, an inorganic silicate monomer is usually stored under basic conditions and used as it is or under acidic conditions to react with a surfactant. Thus, in the case of conventional silicate monomers, it was not possible to take full advantage, in the formation of mesoporous silica, of the formation of nonionic surfactant aggregates under electrolyte-free conditions.

The past template synthesis methods of mesoporous silica have been mostly experimental, and they strongly depended upon the types of surfactants and their blending concentration, concentration of silicate monomer, and their mixing method and mixing temperature. Because of their experimental nature, a lamellar phase, discontinuous cubic phase, or hexagonal phase was templated, and only rod-type mesoporous silica was formed. As a result, the application variation as functional material was limited when the mesoporous silica was used as electronic materials or separation media.

[Patent literature1] Japanese Unexamined Patent Publication No. 2001-261326
[Non-patent literature1] Tatsumi et al., Materials Integration, 2000, Vol. 10, No. 13, p. 50.
[Non-patent literature2] Huo et al., Chem. Mater., 1994, 6, 1176-1191.
[Non-patent literature3] Hironobu Kunieda et al., "Newest Functions of Surfactants and Amphipathic Polymers", CMC Co., Ltd., June of 2005, Chapter 5 "1. Development of Mesoporous Materials by Template Method" (in Japanese)
[Non-patent literature4] Authored by Terasaki, "Mesoporous and Related Nano-Structured Materials", Elsevier, 2004.

DISCLOSURE OF THE INVENTION

PROBLEM TO BE SOLVED BY THE INVENTION

The present invention was made in view of the above-described problem of the conventional art, and an object is to provide a production method of mesoporous silica under electrolyte-free conditions by using a surfactant aggregate structure as a template and to provide mesoporous silica with a new shape, which could not be obtained in the past.

MEANS TO SOLVE THE PROBLEM

The present inventors have diligently studied to solve the problem of the previous section. As a result, the present inventors have found that it was possible to prepare mesoporous silica under electrolyte-free conditions by reacting a nonionic surfactant and a water-soluble silicate monomer with a specific structure under neutral conditions. In addition, the present inventors have found that a sheet-like mesoporous silica could be prepared in the use of a nonionic surfactant that can form a ribbon phase or a nematic phase in suitable temperature and concentration ranges in a water solution; thus leading to completion of the present invention.

The mesoporous silica of the present invention is characterized in that the mesoporous silica can be derived from the following component (A) and component (B).

(A) Nonionic surfactant
(B) Water-soluble silicate monomer represented by the following general formula (1)

$$Si - (OR^1)_4 \qquad (1)$$

(In the formula, $R^1$ represents a polyhydric alcohol residue.)

In the mesoporous silica, it is desirable that $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin. In addition, the mesoporous silica complex of the present invention is characterized in that the mesoporous silica complex can be derived from the foregoing component (A) and component (B). In addition, the mesoporous silica shell of the present invention is
characterized in that the mesoporous silica shell can be derived from the foregoing component

(A) and component (B).

The production method of the mesoporous silica complex of the present invention is characterized in that the foregoing component (A) and component (B) are mixed under neutral conditions in water or in a mixed solvent of water-compatible organic solvent and water.
In the production method of the mesoporous silica complex, it is desirable that $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin.

The production method of the mesoporous silica shell of the present invention is characterized by the removal of component (A), namely, the nonionic surfactant from the mesoporous silica complex obtained by the foregoing production method by washing with an acidic aqueous solution, water, water-compatible organic solvent, or its aqueous solution.
The production method of the mesoporous silica of the present invention is characterized by the calcination of the mesoporous silica complex obtained by the foregoing production method or the mesoporous silica shell obtained by the foregoing production method.

The mesoporous silica of the present invention is characterized in that the particle shape is sheet-like.
In the sheet-like mesoporous silica, it is desirable that the long side (a), short side (b) and thickness (c) satisfy the following equations (1) to (3).

$$c < 50\,\text{nm} \qquad (1)$$

$$b/c > 3 \qquad (2)$$

$$a/b \geqq 1 \qquad (3)$$

In the sheet-like mesoporous silica, it is desirable that the crystal structure is a ribbon phase (R1 phase) or a nematic phase.

EFFECT OF THE INVENTION

According to the present invention, a mesoporous silica with high structural order, due to nonionic surfactant micelles, can be prepared under neutral conditions by the use of a water-soluble silicate monomer with a specific structure. In addition, a new sheet-like mesoporous silica can be obtained; as a result, the application variation of mesoporous silica as functional material can be extended. For example, the application to electronic materials and separation media is expected.

BRIEF DESCRIPTION OF THE DRAWINGS

Fig. 1 shows a transmission electron micrograph (TEM) of the mesoporous silica powder in Example 1 of the present invention.
Fig. 2 shows an adsorption curve measured for the mesoporous silica powder in Example 10 of the present invention.
Fig. 3 shows a transmission electron micrograph (TEM) of the mesoporous silica powder in Example 10 of the present invention.
Fig. 4 shows a scanning electron micrograph (SEM) of the mesoporous silica powder in Example 10 of the present invention.
Fig. 5 shows a small-angle X-ray scattering pattern for the mesoporous silica powder in Example 10 of the present invention.
Fig. 6 shows a transmission electron micrograph (TEM) and its FFT image of the mesoporous silica powder in Example 10 of the present invention.
Fig. 7 shows a polarization micrograph of 20% POE (10 mol) phytosterol aqueous solution in Example 11 of the present invention.
Fig. 8 shows a polarization micrograph of 20% tetra(hydroxyethoxy)silane-POE (10 mol) phytosterol aqueous solution in Example 11 of the present invention.
Fig. 9 shows a transmission electron micrograph (TEM) of the mesoporous silica powder in Example 11 of the present invention.
Fig. 10 shows a transmission electron micrograph (TEM) of the mesoporous silica powder in Example 11 of the present invention.
Fig. 11 shows a scanning electron micrograph (SEM) of the mesoporous silica powder in Example 11 of the present invention.

BEST MODE FOR CARRYING OUT THE INVENTION

The mesoporous silica of the present invention is characterized in that the mesoporous silica can be derived from the following component (A) and component (B).

(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)

The nonionic surfactant (A) used in the present invention is not limited in particular, and various nonionic surfactants illustrated below can be used. The typical examples include polyoxyethylene-type nonionic surfactant, polyglycerin-type nonionic surfactant, and sugar ester-type nonionic surfactant. These can be used either alone or in combination of two or more.
More specific examples include POE alkyl ethers, POE alkyl phenyl ethers, POE/POP alkyl ethers, POE fatty acid esters, POE sorbitan fatty acid esters, POE glycerin fatty acid esters, POE castor oil or hydrogenated castor oil derivatives, POE beeswax/lanolin derivatives, alkanolamides, POE propylene glycol fatty acid esters, POE alkylamines, POE fatty acid amides, sugar fatty acid esters, polyglycerin fatty acid esters, and polyether-modified silicones. More specific examples include POE cholesterol ethers and POE phytosterol ethers. These may be used either alone or in combination of two or more. Here, "POE" represents polyoxyethylene and "POP" represents polyoxypropylene; hereinafter they may be described as such.

The alkyl group of a POE-type nonionic surfactant is an alkyl group of a saturated or unsaturated fatty acid with 6 to 22 carbon atoms. Examples include alkyl groups of single-component fatty acids such as lauric acid, myristic acid, palmitic acid, stearic acid, and oleic acid. Other alkyl groups may be alkyl groups of naturally obtained mixed fatty acids such as coconut oil fatty acid, beef tallow fatty acid, hydrogenated beef tallow fatty acid, castor oil fatty acid, olive oil fatty acid, and palm oil fatty acid; or alkyl groups of synthetically obtained fatty acids (include branched fatty acids). In addition, the alkyl group may be a fluoroalkyl group, in which a hydrogen atom is substituted by a fluorine atom in an arbitrary ratio. In the POE-type nonionic surfactant, the number of condensed POE is preferably in the range of 1 to 50, and more preferably in the range of 5 to 20.

The water-soluble silicate monomer (B) used in the present invention is represented by the above-described general formula (1). In the water-soluble silicate monomer represented by the above-described general formula (1), $R^1$ is a polyhydric alcohol residue, and it is represented in a form wherein one hydroxyl group is removed from a polyhydric alcohol. The water-soluble silicate monomer can usually be prepared by a substitution reaction of tetraalkoxysilane with a polyhydric alcohol. $R^1$ varies depending upon what kind of polyhydric alcohol is used. For example, $R^1$ is $-CH_2-CH_2-OH$ when ethylene glycol is used as the polyhydric alcohol.

Examples of $R^1$ in the above general formula (1) include an ethylene glycol residue, diethylene glycol residue, triethylene glycol residue, tetraethylene glycol residue, polyethylene glycol residue, propylene glycol residue, dipropylene glycol residue, polypropylene glycol residue, butylene glycol residue, hexylene glycol residue, glycerin residue, diglycerin residue, polyglycerin residue, neopentyl glycol residue, trimethylolpropane residue, pentaerythritol residue, and maltitol residue. Among these, it is preferable that $R^1$ is any one selected from the group consisting of an ethylene glycol residue, a propylene glycol residue, a butylene glycol residue, and a glycerin residue.

More specific examples of the water-soluble silicate monomers (B) used in the present invention include $Si-(O-CH_2-CH_2-OH)_4$, $Si-(O-CH_2-CH_2-CH_2-OH)_4$, $Si-(O-CH_2-CH_2-CHOH-CH_3)_4$, and $Si-(O-CH_2-CHOH-CH_2-OH)_4$-

The water-soluble silicate monomer (B) used in the present invention can be prepared, for example, by the reaction of a tetraalkoxysilane and a polyhydric alcohol under the presence of a solid catalyst.

The tetraalkoxysilane may be any so far as four alkoxy groups are bonded to a silicon atom, and it is not limited in particular. Examples of tetraalkoxysilanes for the production of water-soluble silicate monomers include tetramethoxysilane, tetraethoxysilane, tetraisopropoxysilane; tetrapropoxysilane, and tetrabutoxysilane. Among these, tetraethoxysilane is the most preferable from the stand point of availability and the safety of reaction by-products.

As an alternative compound for the tetraalkoxysilane, a mono-, di-, or trihalogenated alkoxysilane such as monochlorotriethoxysilane, dichlorodimethoxysilane or monobromotriethoxysilane; or a tetrahalogenated silane such as tetrachlorosilane could be used. However, these compounds generate strong acids such as hydrogen chloride and hydrogen bromide during the reaction with a polyhydric alcohol. As a result, the corrosion of the reaction apparatus may take place, and the post-reaction separation and removal are difficult; thus they are not practicable.

The polyhydric alcohol may be any so far as two or more of hydroxyl groups are contained in the molecule, and it is not limited in particular. Examples of polyhydric alcohols used for the production of water-soluble silicate monomers include ethylene glycol, diethylene glycol, triethylene glycol, tetraethylene glycol, polyethylene glycol, propylene glycol, dipropylene glycol, polypropylene glycol, butylene glycol, hexylene glycol, glycerin, diglycerin, polyglycerin, neopentyl glycol, trimethylolpropane, pentaerythritol, and maltitol. Among these, it is preferable to use any one selected from the group of ethylene glycol, propylene glycol, butylene glycol, and glycerin.

The solid catalyst may be any so far as it is a solid catalyst insoluble in raw materials, reaction solvent, and reaction products and it is a solid having active acid points and/or base points for the substituent exchange reaction on the silicon atom. Examples of the solid catalysts used in the present invention include ion exchange resins and various inorganic solid acid/base catalysts.

Examples of ion exchange resins used as the solid catalyst include acidic cation exchange resins and basic anion exchange resins. Examples of matrix resins for these ion exchange resins include styrene-type, acryl-type, and methacryl-type resins. Examples of functional groups with catalyst activity include sulfonic acid, acrylic acid, methacrylic acid, quaternary ammonium, tertiary amine, and primary and secondary polyamines. The matrix structure of ion exchange resin can be selected, depending upon the objectives, from the group consisting of a gel type, a porous type, and a biporous type.

Examples of acidic cation exchange resins include Amberlite IRC76, FPC3500, IRC748, IRB120B Na, IR124 Na, 200CT Na (products of Rohm and Haas Co.), Diaion SK1B, PK208 (products of Mitsubishi Chemical Corporation), DowEx Monosphere 650C, Marathon C, HCR-S, and Marathon MSC (products of Dow Chemical Company). Examples of basic anion exchange resins include Amberlite IRA400J Cl, IRA402BL Cl, IRA410J Cl, IRA411 C1, IRA458RF Cl, IRA900J Cl, IRA910CT Cl, IRA67, IRA96SB (products of Rohm and Haas Co.), Diaion SA10A, SAF11AL, SAF12A, PAF308L (products of Mitsubishi Chemical Corporation), DowEx Monosphere 550A, Marathon A, Marathon A2, and Marathon MSA (products of Dow Chemical Company).

Inorganic solid acid/base catalysts used as the solid catalyst are not limited in particular. Examples of inorganic solid acid catalysts include single metal oxides such as $Al_2O_3$, $SiO_2$, $ZrO_2$, $TiO_2$, $ZnO$, $MgO$, and $Cr_2O_3$; composite metal oxides such as $SiO_2$-$Al_2O_3$, $SiO_2$-$TiO_2$, $SiO_2$-$ZrO_2$, $TiO_2$-$ZrO_2$, $ZnO$-$Al_2O_3$, $Cr_2O_3$-$Al_2O_3$, $SiO_2$-$MgO$, and $ZnO$-$SiO_2$; metal sulfates such as $NiSO_4$ and $FeSO_4$; metal phosphates such as $FePO_4$; immobilized sulfuric acid such as $H_2SO_4$/$SiO_2$; immobilized phosphoric acid such as $H_2PO_4$/$SiO_2$; immobilized boric acid such as $H_3BO_3$/$SiO_2$; natural minerals or layered compounds such as activated clay, zeolite, kaolin, and montmorillonite; synthetic zeolite such as $AlPO_4$-zeolite; and heteropolyacids such as $H_3PW_{12}O_{40}$ ·$5H_2O$ and $H_3PW_{12}O_{40}$. Examples of solid inorganic base catalysts include single metal oxides such as $Na_2O$, $K_2O$, $Rb_2O$, $Cs_2O$, $MgO$, $CaO$, $SrO$, $BaO$, $La_2O_3$, $ZrO_3$, and $ThO_3$; metal salts such as $Na_2CO_3$, $K_2CO_3$, $KHCO_3$, $KNaCO_3$, $CaCO_3$, $SrCO_3$, $BaCO_3$, $(NH_4)_2CO_3$, $Na_2WO_4$ ·$2H_2O$, and $KCN$; metal oxide-supported alkali metals such as $Na$-$Al_2O_3$ and $K$-$SiO_2$; zeolite-supported alkali metals such as $Na$-mordenite; and composite metal oxides such as $SiO_2$-$MgO$, $SiO_2$-$CaO$, $SiO_2$-$SrO$, $SiO_2$-$ZnO$, $SiO_2$-$Al_2O_3$, $SiO_2$-$ThO_2$, $SiO_2$-$TiO_2$, $SiO_2$-$ZrO_2$, $SiO_2$-$MoO_3$, $SiO_2$-$WO$, $Al_2O_3$-$MgO$, $Al_2O_3$-$ThO_2$, $Al_2O_3$-$TiO_2$, $Al_2O_3$-$ZrO_2$, $ZrO_2$-$ZnO$, $ZrO_2$-$TiO_2$, $TiO_2$-$MgO$, and $ZrO_2$-$SnO_2$.

A solid catalyst can be easily separated, by the treatment such as filtration or decantation, from the products after the completion of the reaction.

In the production of water-soluble silicate monomers, the reaction temperature is not limited in particular, and the reaction is preferably carried out under the temperature condition of 5 to 90 ˚C. When the reaction is carried out under the temperature condition of higher than 90 ˚C, there is an issue with the durability of the reaction apparatus. In addition, it is necessary to use a high-boiling solvent for the reaction; as a result, the complete separation and removal of the solvent are difficult. In the production method of the present invention, it is preferable to carry out the reaction under the condition of ordinary temperature, namely, under the temperature condition of 5 to 35 ˚C. When a reaction is carried out under the condition of ordinary temperature, it is desirable to use, as the polyhydric alcohol, any one selected from the group consisting of ethylene glycol, propylene glycol, and butylene glycol. When other polyhydric alcohols such as glycerin are used, reaction products may not be generated under the condition of ordinary temperature.

In the production of water-soluble silicate monomers, it is not necessary to use a solvent during the reaction; however, various solvents may be used as necessary. The solvent used in the reaction is not limited in particular, and the examples include aromatic hydrocarbons such as benzene, toluene, and xylene; ester, ether, and ketone solvents such as ethyl acetate, methyl acetate, acetone, methyl ethyl ketone, Cellosolve, diethyl ether, and dioxane; polar solvents such as acetonitrile, dimethylformamide, and dimethyl sulfoxide; and halogen solvents such as chloroform and dichloromethane. In order to suppress the hydrolysis-condensation reaction of a tetraalkoxysilane, which is used as a raw material, it is desirable to dehydrate the solvent in advance. Among these solvents, it is preferable to use acetonitrile, toluene, etc. that can promote the reaction by removing alcohols, such as ethanol, formed as a by-product during the reaction to the outside of the system by forming an azeotropic mixture.

The mesoporous silica of the present invention is derived from the above-described components (A) and (B). Hereinafter, the production method of mesoporous silica of the present invention will be described.

In the present invention, a mesoporous silica complex is initially prepared with the use of the above-described components (A) and (B). As the production method of the mesoporous silica complex, a normal mixing method in a solvent can be used for components (A) and (B). According to this method, component (B) is normally mixed into component (A), which has been dissolved in the solvent; then the mesoporous silica complex is produced by allowing it to stand or by stirring for a fixed time at a predefined temperature.

As the solvent used for the production of the mesoporous silica complex, water or a solvent containing a mixture of a water-compatible organic solvent and water can normally be used. Preferably water alone can be used from the standpoint of promoting the formation of self-assembled nonionic surfactant (component (A)), or mixed solvents with various alcohols can be used in order to improve the solubility of the nonionic surfactant. More preferably water alone, or mixed solvent such as water-ethanol or water-methanol can be used.

The temperature condition for the production of the mesoporous silica complex is not limited in particular, and the production is normally carried out in the range between room temperature and the boiling point of the used solvent. From the stand point of mixing and reaction promotion, the production is preferably carried out in the temperature range wherein nonionic surfactant (component (A)) aggregates can be stably formed. When the used nonionic surfactant (component (A)) shows the Krafft point, which corresponds to the melting point of its hydrate, or the cloud point, which is the solubilization limit temperature of nonionic surfactant micelles, the desirable temperature is the Krafft point or higher and the cloud point or lower.

The reaction time for the production of the mesoporous silica complex is normally in the range of 1 minute to 168 hours. From the stand point of the hydrolysis and condensation polymerization of the silicate monomer, the reaction time is preferably 5 minutes to 48 hours, and more preferably 30 minutes to 10 hours.

The production of the mesoporous silica complex of the present invention is carried out under neutral conditions, specifically in the range of pH 4 to 10, and preferably in the range of pH 6 to 8. In order to promote the hydrolysis and condensation polymerization of the silicate monomer without forming electrolytes as by-products, components (A) and (B) are dissolved in water or water-alcohol mixed solvents. In order to accelerate the reaction of components (A) and (B), it is possible to add an acid or a base in the same way as in the production of mesoporous silica by the normal template method. In this case, however, it is necessary to remove electrolytes by washing in accordance with the intended use of a formed mesoporous silica.

In the production of the mesoporous silica complex of the present invention, one or more nonionic surfactants (component (A)) may be used. The concentration of the nonionic surfactants is not limited in particular so far as a three-dimensional micellar structure is formed. The concentration in the solution is normally 0.01 to 80 weight %, preferably 0.2 to 30 weight %, and more preferably 1.0 to 20.0 weight %.

In the production of the mesoporous silica complex of the present invention, the percentage of the water-soluble silicate monomer (component (B)) with respect to the total of components (A) and (B) is normally 0.1 to 98 mole %, preferably 1 to 95 mole %, and more preferably 10 to 90 mole %.

The formation of a mesoporous silica complex thus produced can be confirmed by the scanning or transmission electron microscope observation and X-ray powder diffraction. The thus obtained mesoporous silica complex can be washed with acidic aqueous solution, water, water-compatible organic solvent, or its aqueous solution to obtain a mesoporous silica shell. Or the obtained mesoporous silica complex can be calcinated to obtain a mesoporous silica. In addition, the mesoporous silica complex is expected to be used as water and solvent carrier for cosmetic components, paint, construction materials, and other various composite materials. It is also expected to be used as a film or a thin film.

A mesoporous silica shell can be produced by washing the thus obtained mesoporous silica complex with an acidic aqueous solution, water, water-compatible organic solvent, or its aqueous solution.

The treatment solvent used in the production of the mesoporous silica shell is not limited in particular, and various solvents can be used. From the standpoint of the structural retention of the mesoporous silica shell, however, the treatment solvent is preferably a polar solvent, and more preferably water or alcohol.

The treatment temperature in the production of the mesoporous silica shell is normally in the range from room temperature to the boiling point of the used solvent. From the standpoint of the structural retention of the mesoporous silica shell, yield of the mesoporous silica shell, and the boiling point of treatment solvent, the treatment temperature is preferably room temperature to 100 ˚C, and more preferably room temperature to 80 ˚C.

The treatment time in the production of the mesoporous silica shell is normally in the range of 1 to 72 hours. From the standpoint of the structural retention of the mesoporous silica shell and the yield of the mesoporous silica shell, it is preferably 8 to 48 hours, and more preferably 24 to 48 hours.

In the production of mesoporous silica shell, an acidic aqueous solution may be used. The acid is not limited in particular, and various ordinary acids can be used. Examples include hydrochloric acid, acetic acid, nitric acid, sulfuric acid oxalic acid, and phosphoric acid. From the stand point of the yield of mesoporous silica shell, it is preferably hydrochloric acid, acetic acid, nitric acid, or sulfuric acid, and more preferably hydrochloric acid or acetic acid.

The thus produced mesoporous silica shell formation can be confirmed by X-ray powder diffraction, nitrogen adsorption/desorption measurements, and electron microscope observation. The thus obtained mesoporous silica shell is expected to be used as an adsorption separation material of a specific molecule from a mixture or as a composite with an adsorbed specific material by utilizing the interaction with the mesoporous space obtained from the self-assembled structure of the nonionic surfactant, which has been used as a template. It is also expected to be used by changing the form to a film or a thin film.

The mesoporous silica of the present invention can be produced by the calcination of the thus obtained mesoporous silica complex or mesoporous silica shell.

The calcination temperature in the production of mesoporous silica is normally in the range of 300 to 900 ˚C. From the standpoint of the structural retention of the mesoporous silica and the complete removal of surfactant, the calcination temperature is preferably 400 to 650 ˚C, and more preferably 500 to 600 ˚C.

The calcination time for the production of mesoporous silica is normally in the range of 2 to 24 hours. From the standpoint of the complete removal of surfactant, the calcination time is preferably 4 to 12 hours, and more preferably 6 to 10 hours.

The thus produced mesoporous silica can be used as catalysts and adsorbents in the same way as those obtained by the conventional publicly known production method. When the mesoporous silica complex, mesoporous silica shell, and mesoporous silica of the present invention are used as catalysts or adsorbents, where practical, a combination of two or three thereof can be used at the same time.

In the above-described production method of the present invention, a sheet-like mesoporous silica could be prepared by the use of a nonionic surfactant that can form a ribbon phase or a nematic phase in suitable temperature and concentration ranges in a water solution. Specific examples of surfactants that can form a ribbon phase include polyoxyethylene (10 mol) cholesterol ether. Examples of surfactants that can form a nematic phase include polyoxyethylene (10 mol) phytosterol.

Thus, the mesoporous silica of the present invention is characterized in that the particle shape is sheet-like. In the present invention, "sheet-like" means "approximately flaky". More specifically, the long side (a), short side (b) and thickness (c) preferably satisfy the following equations (1) to (3).

$$c < 50 \text{ nm} \qquad (1)$$

$$b/c > 3 \qquad (2)$$

$$a/b \geqq 1 \qquad (3)$$

In the sheet-like mesoporous silica of the present invention, it is more preferable that (c) is less than 50 nm, b/c is 5 or higher, and a/b is 10 or higher.

In addition, it is desirable that the crystal structure of the sheet-like mesoporous silica of the present invention is a ribbon phase (R1 phase) or a nematic phase. However, there may be any irregularity within the total structure so far as the above-described crystal structure is partially retained.

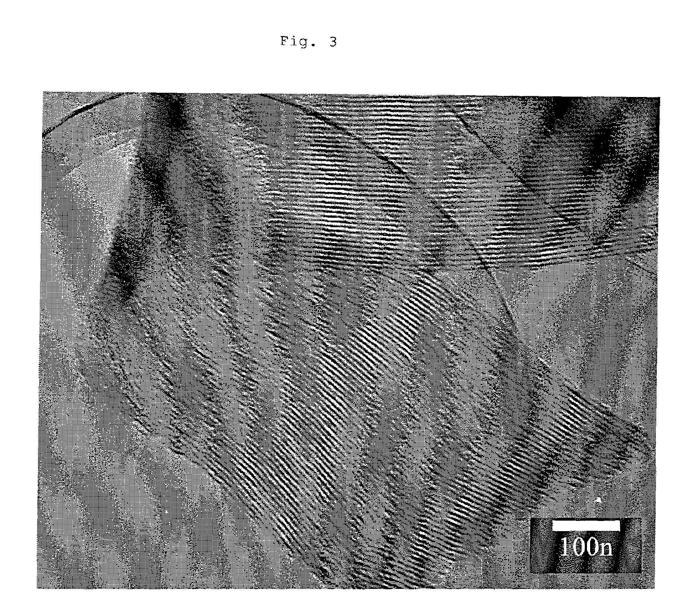

Whether the crystal structure of any mesoporous silica is a ribbon phase or a nematic phase can be identified by the small-angle X-ray scattering measurement. If the obtained scattering pattern by the small-angle X-ray scattering measurement is equivalent, for example, to the pattern obtained for the specific crystal structure shown in the top right section of Fig. 3, the crystal structure can be identified to be a ribbon phase (refer to: Naitou et al., J. Oleo Sci., 54, 7-13 (2005)). In the sheet-like mesoporous silica of the present invention, the sheet can be one sheet, or several to several tens of sheets may be overlapped.

EXAMPLES

The present invention will hereinafter be described in detail by specific examples. However, the present invention is not limited by these examples.

First, the production method of the water-soluble silicate monomer used in the present invention will be described.

Synthesis Example 1

To 150 mL of acetonitrile, 20.8 g (0.1 mol) of tetraethoxysilane and 24.9 g (0.4 mol) of ethylene glycol were added, and then 1.8 g of strong acid ion exchange resin (DowEx 50W-X8, a product of Dow Chemical Company) was also added as a solid catalyst. Then the mixture was mixed with stirring at room temperature. The reaction solution, which was initially separated into two layers, became a homogeneous solution after about 1 hour. The stirring of the mixture was continued for 5 days, and then the solid catalyst was separated by filtration. Acetonitrile was distilled away under reduced pressure, and 39 g of transparent viscous liquid was obtained. Based on the results of NMR analysis, the product was confirmed to be the desired tetra(2-hydroxyethoxy)silane (yield: 72.5%).

Production of mesoporous silica

The present inventors prepared a water-soluble silicate monomer according to the above-described synthesis example and tried the preparation of a mesoporous silica with the use of a nonionic surfactant and the water-soluble silicate monomer.

Example 1

The surfactant POE (20 mol) oleyl ether (0.4 g) was added to ion-exchanged water (3.6 g) and stirred until a homogeneous solution was obtained, and then tetra(hydroxyethoxy)silane (1.0 g) was added and stirred for 1 more hour. The solution showed a transparent uniform appearance. The solution was allowed to stand at 25 ˚C for 8 hours; then slight turbidity was generated throughout the aqueous solution. After still standing for an additional 16 hours, the entirety became cloudy and became a gel. This gel was lyophilized to remove water, ethanol was added and allowed to stand at 37 ˚C overnight, and the ethanol solution containing the surfactant was removed. The remaining white powder was dried with an evaporator, and a silica powder was obtained.

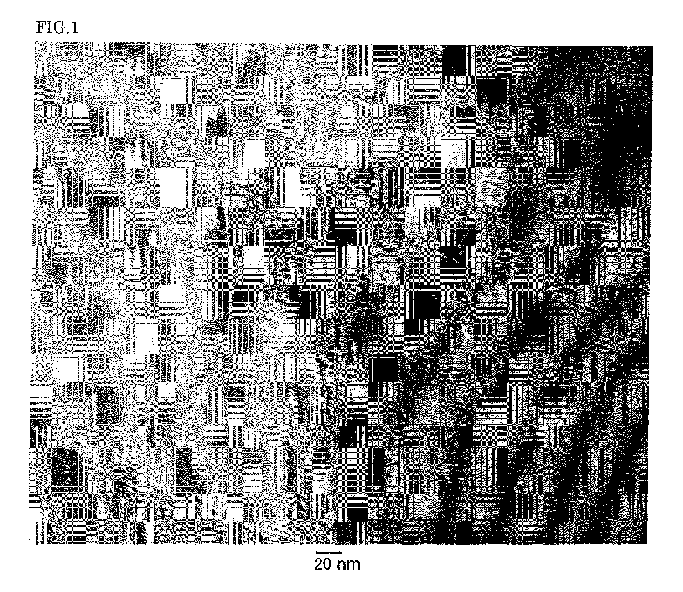

The silica powder obtained in Example 1 was observed with a transmission electron microscope. The obtained micrograph is shown in Fig. 1. As seen in Fig. 1, a wave-like pattern was observed at the center, and the presence of pores with the size of 10 to 20 nm was confirmed.

Comparative Example 1

The surfactant POE (20 mol) oleyl ether (0.4 g) was added to ion-exchanged water (3.6 g); then tetraethoxysilane (1.0 g) was added and the mixture was stirred. Immediately after stirring, the mixture was separated into a cloudy oil phase and a transparent water phase. This mixture was allowed to stand at 25 ˚C for 24 hours; then the oil phase became a gel by retaining white cloudiness. This gel portion was lyophilized to remove water, ethanol was added and allowed to stand at 37 ˚C overnight, and the ethanol solution containing the surfactant was removed. The remaining white powder was dried with an evaporator, and a silica powder was obtained.

The silica powder obtained in Comparative Example 1 was observed with an electron microscope, and the silica powder was confirmed to be amorphous.

The preparation of mesoporous silica was tried, according to the same procedure as Example 1, by using various nonionic surfactants. The results are shown in Table 1 (numbers in the table represent the blending quantity (unit: g)). The results for the cases in which conventional tetraethoxysilane was used as the silicate monomer are also shown as comparative examples.

[Table 1]

| | Example 2 | Example 3 | Example 4 | Example 5 | Comparative Example 2 | Comparative Example 3 | Comparative Example 4 |
|---|---|---|---|---|---|---|---|
| Ion-exchanged water | 3.6 | 3.6 | 3.6 | 3.6 | 3.6 | 3.6 | 3.6 |
| POE (60 mol) hydrogenated castor oil | 0.4 | | | | 0.4 | | |
| POE (20 mol) POP (20 mol) 2-decyl tetradecanol ether | | 0.4 | | 0.4 | | 0.4 | |
| POE (25 mol) POP (30 mol) block copolymer | - | - | 0.4 | - | - | - | 0.4 |
| Tetra (hydroxyethoxy) silane | 1.0 | 1.0 | 1.0 | - | - | - | - |
| Tetra(2,3-dihydroxypropoxy)silane | - | - | - | 1.0 | - | - | - |
| Tetraethoxysilane | - | - | - | - | 1.0 | 1.0 | 1.0 |
| Appearance immediately after mixing | transpare nt homogen eous | transpare nt homogen eous | transpare nt homogen eous | transpare nt homogen eous | separation to 2 phases | separation to 2 phases | separation to 2 phases |
| Appearance after 24 hours | transluce nt gelation | white cloudine ss gelation | silica sediment ation | white cloudine ss gelation | no change | gelation of only oil phase | no change |
| Silica formation | yes | yes | yes | yes | no | partially | no |

EP 2 030 949 A1

When the water-soluble tetra(hydroxyethoxy)silane was used as the silicate monomer (Examples 2 to 4), upon mixing of tetra(hydroxyethoxy)silane with an aqueous solution of various surfactants, the mixture swiftly became transparent and homogeneous. After at least 24 hours, the gelation of the whole system or the sedimentation of silica powder due to silica formation was observed. In addition, the obtained silica was found to have a mesoporous structure by electron microscope observation.

On the other hand, when tetraethoxysilane was used as the silicate monomer, the silica formation was very slow because tetraethoxysilane does not homogeneously mix with an aqueous solution. In Comparative Examples 2 and 4, the silica formation did not take place at all. Even in Comparative Example 3, in which the silica formation took place, the silica formation was partial. In order to obtain mesoporous silica with the use of the silicate monomer that does not homogeneously mix with such an aqueous solution, the known method in which the aqueous solution is made acidic or basic and a lower alcohol is added as a solubilizing agent should be adopted.

Subsequently, the preparation of mesoporous silica was tried according to the same procedure as Example 1 by varying the concentration of nonionic surfactants. The results are shown in following Table 2 (numbers in the table represent the blending amount (unit: g)). The results for the cases in which tetraethoxysilane was used are also shown as comparative examples.

[Table2]

| | Example 6 | Example 7 | Example 8 | Comparative Example 5 | Comparative Example 6 | Comparative Example 7 |
|---|---|---|---|---|---|---|
| Ion-exchanged water | 3.96 | 1.2 | 0.6 | 3.96 | 1.2 | 0.6 |
| POE (20 mol) oleyl ether | 0.04 | 0.8 | 1.4 | 0.04 | 0.8 | 1.4 |
| Tetra (hydroxyethoxy) silane | 1.0 | 2.0 | 2.0 | - | - | - |
| Tetraethoxysilane | - | - | - | 1.0 | 2.0 | 2.0 |
| Appearance immediately after mixing | transparent homogeneous | transparent homogeneous | transparent homogeneous | separation to 2 phases | separation to 2 phases | separation to 2 phases |
| Appearance after 24 hours | silica sedimentation | transparent gelation | transparent gelation | no change | no change | no change |
| Silica formation | yes | yes | yes | no | no | no |

In Examples 6 to 8, in which a water-soluble silicate monomer was used, the silica formation or the transparent solution gelation due to silica formation took place within 24 hours. In Examples 6 to 8, the surfactant aqueous solution formed a micellar phase, cubic phase, and hexagonal phase, respectively. In all phases, they were compatible with the silicate monomer, and the swift silica formation took place. On the other hand, in Comparative Examples 5 to 7, in which a water-insoluble silicate monomer was used, the silicate monomer and the surfactant aqueous solution were hardly mutually soluble, and the silica formation was not observed even 1 week after mixing.

Example 9

The surfactant POE (10 mol) phytosterol ether (0.8 g) was added to ion-exchanged water (3.2 g), and the mixture was stirred until it became homogeneous. This surfactant solution was confirmed to be a chiral nematic liquid crystal phase by the microscopic observation etc. To this liquid crystal, tetra(hydroxyethoxy)silane (1.0 g) was added and stirred for 10 minutes. The solution showed a transparent uniform appearance. The solution was allowed to stand at 25°C for 3 hours; then the entire solution became cloudy. After the additional still standing for 17 hours, the entire solution became a gel by retaining white cloudiness. This gel was lyophilized to remove water, ethanol was added and allowed to stand at 37 °C overnight, and the ethanol solution containing the surfactant was removed. The remaining white powder was dried with an evaporator, and a silica powder was obtained.

The silica powder obtained in Example 9 was observed with a transmission electron microscope, and orderly wave-like pores with the size of 10 to 20 nm were recognized.

Example 10

Ion-exchanged water (270 g) and the surfactant POE (10 mol) cholesterol ether (15 g) were mixed and stirred until the mixture became homogeneous. To this solution, tetra(hydroxyethoxy)silane (15 g) was added and stirred at 60 °C for 24 hours; then silica was formed from the solution and sedimented. The silica obtained by filtration was dried with stirring at 90 °C for 24 hours, ethanol was added to it, and the mixture was stirred at ordinary temperature overnight. The ethanol solution containing the surfactant was removed, and silica powder (3.0 g) was obtained by removing ethanol under still standing at 80 °C for 5 hours.

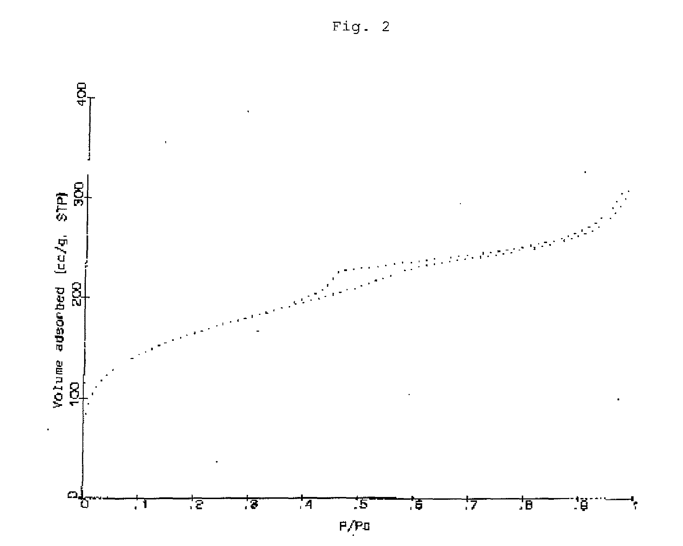

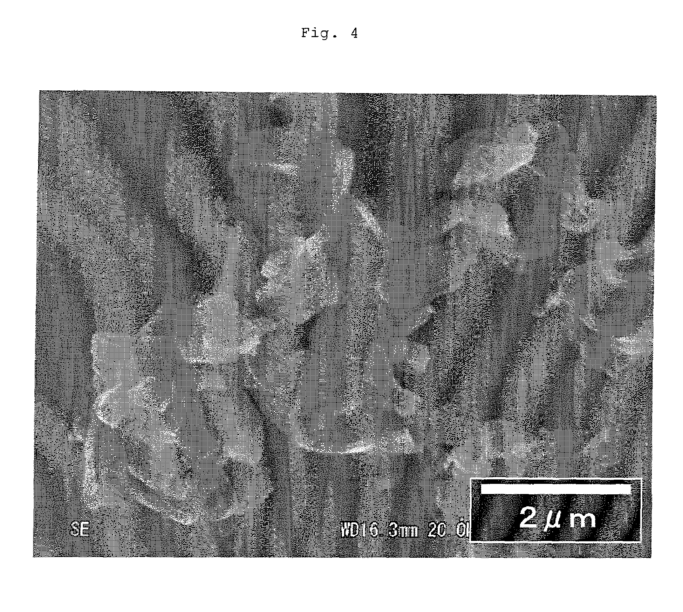

An adsorption curve for the silica powder obtained in Example 10 is shown in Fig. 2. As understood from Fig. 2, the silica powder obtained in Example 10 has mesopores. The silica powder obtained in Example 10 was observed with a transmission electron microscope, and the micrographs are shown in Figs. 3 and 4. As shown in Fig. 3, the silica powder obtained in Example 10 had a pore structure with an orderly two-dimensional array by reflecting the aggregate structure of the surfactant. In addition, as shown in Fig. 4, the particle shape of the silica powder obtained in Example 10 was sheet-like, and it became clear that it was a new-shape mesoporous silica, which was never obtained in the past. In the silica powder obtained in Example 10, c = 47 nm, b/c = 10.1, and a/b = 10.3 when the long side is (a), short side is (b) and the thickness is (c).

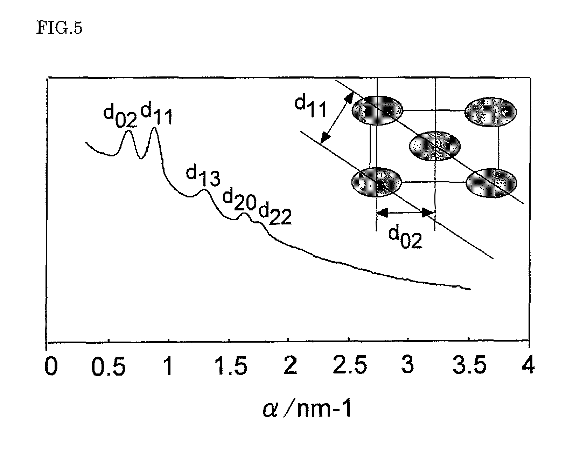

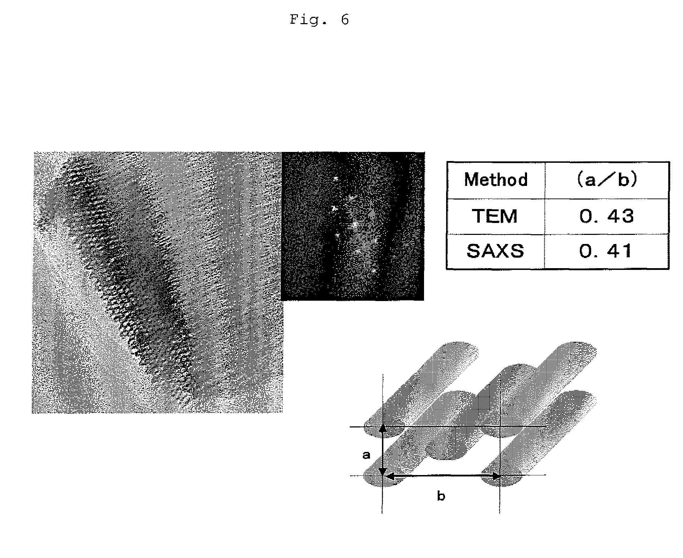

The silica powder obtained in Example 10 was measured by small-angle X-ray scattering (SAXS), and the SAXS pattern is shown in Fig. 5. In addition, a transmission electron micrograph (TEM) and its FFT image of the silica powder obtained in Example 10 are shown in Fig. 6. As shown in Figs. 5 and 6, it was confirmed that the sheet-like mesoporous silica obtained in Example 10 had a ribbon phase (R1 phase) crystal structure.

Example 11

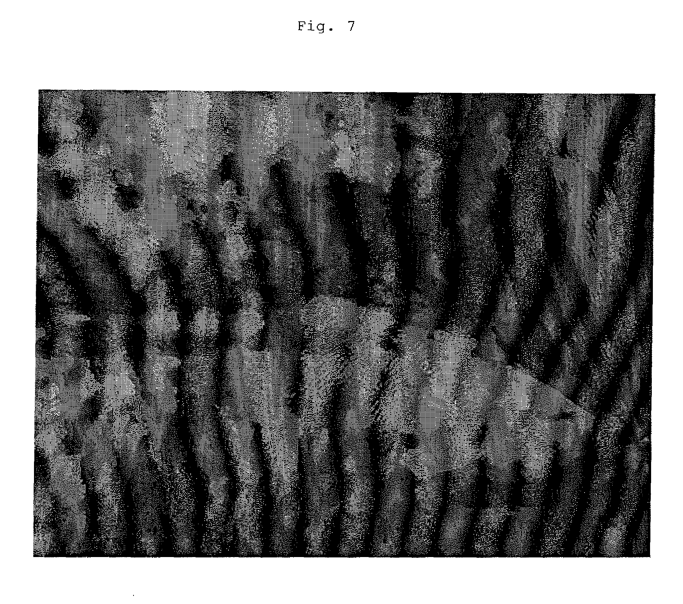

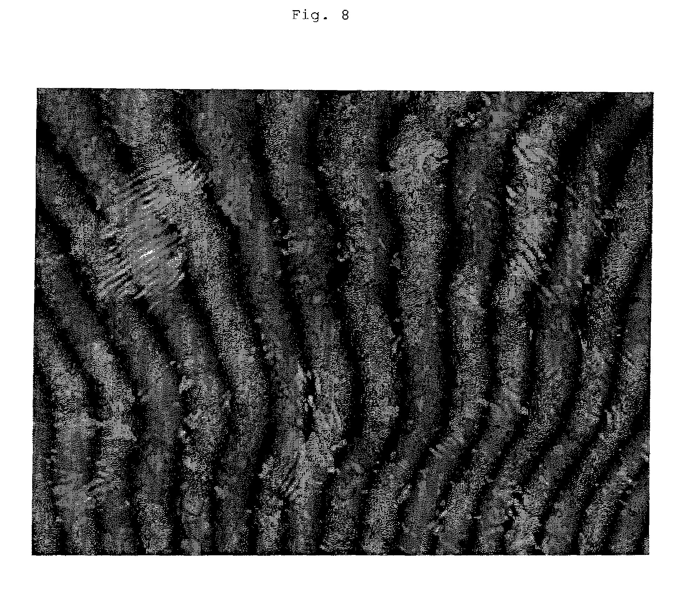

The surfactant POE (10 mol) phytosterol (5 g) and water (20 g) were heated and mixed to prepared 20% aqueous solution of POE (10 mol) phytosterol. It was confirmed that the surfactant aqueous solution had a nematic phase with a polarization microscope (Fig. 7). To this solution, tetra(hydroxyethoxy)silane (5 g) was added and stirred well manually. The surfactant aqueous solution was translucent; however, the solution became slightly cloudy immediately after the addition of tetra(hydroxyethoxy)silane. The phase state at this stage was confirmed to be a nematic phase by the observation with a polarization microscope (Fig. 8). After 10 minutes, the turbidity increased further. After 1 hour, the solution became a white gel. The white turbidity of the solution progressed from the top. It was considered that a nematic phase was probably maintained, as the phase state of the gel, even after still standing. The gel (about 5 g) was dried overnight at 90 °C, and a solid was obtained. Then the solid was centrifuged, and the supernatant was removed. This operation was repeated three times; then the solid was dried at 60 °C for 5 hours. The obtained solid was crushed with a mortar and pestle, and a silica powder was obtained.

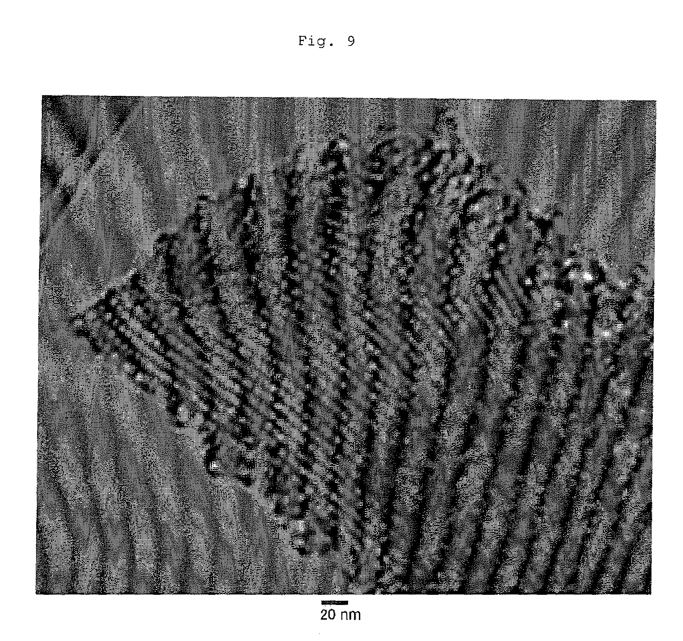

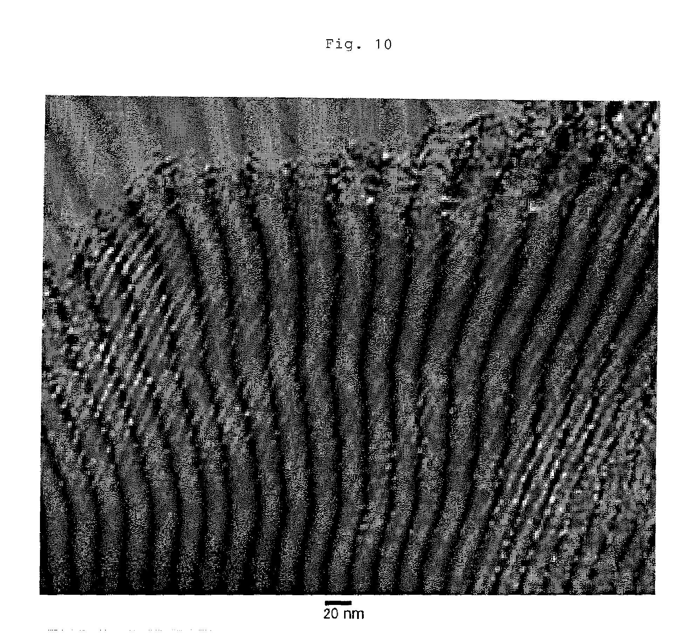

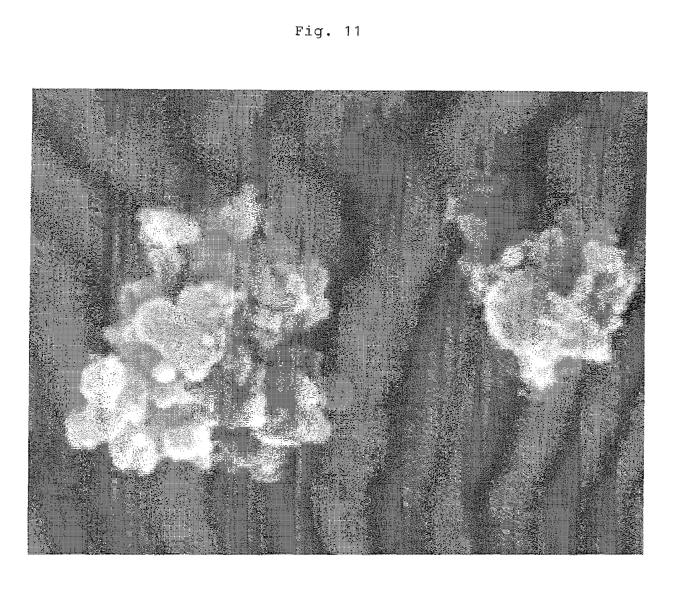

Transmission electron micrographs (TEM) of the silica powder obtained in Example 11 are shown in Figs. 9 and 10, and a scanning electron micrograph (SEM) is shown in Fig. 11. As shown in Figs. 9 to 11, it was found that the obtained silica powder in Example 11 had a pore structure with an orderly two-dimensional array and that the particle shape was sheet-like.

**Claims**

1. A mesoporous silica derived from the following component (A) and component (B).

   (A) Nonionic surfactant
   (B) Water-soluble silicate monomer represented by the following general formula (1)

   $$Si - (OR^1)_4 \qquad (1)$$

   (In the formula, $R^1$ represents a polyhydric alcohol residue.)

2. The mesoporous silica accoding to claim 1, wherein the $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin.

3. A mesoporous silica complex derived from the foregoing component (A) and component (B).

4. A mesoporous silica shell derived from the foregoing component (A) and component (B).

5. A production method of a mesoporous silica complex comprising mixing the foregoing component (A) and component (B) under neutral conditions in water or in a mixed solvent of water-compatible organic solvent and water.

6. The production method of a mesoporous silica complex according to claim 5, wherein the $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin.

7. A production method of a mesoporous silica shell comprising, removing of the nonionic surfactant of the component (A) from the mesoporous silica complex obtained by the production method according to claim 5 by washing with an acidic aqueous solution, water, water-compatible organic solvent, or its aqueous solution.

8. A production method of a mesoporous silica comprising, calcinating of the mesoporous silica complex obtained by the production method according to claim 5 or the mesoporous silica shell obtained by the production method according to claim 7.

9. A mesoporous silica wherein the particle shape is sheet-like.

10. The sheet-like mesoporous silica according to claim 9, wherein the long side (a), short side (b) and thickness (c) satisfy the following equations (1) to (3).

$$c < 50 \, nm \qquad (1)$$

$$b/c > 3 \qquad (2)$$

$$a/b \geqq 1 \qquad (3)$$

11. The sheet-like mesoporous silica according to claim 9 or 10, wherein the crystal structure is a ribbon phase (R1 phase) or a nematic phase.

**Amended claims under Art. 19.1 PCT**

**1.** A mesoporous silica derived from the following component (A) and component (B).

(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)

**2.** The mesoporous silica accoding to claim 1, wherein the $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin.

**3.** (amended) A Mesoporous silica complex derived from the following component

(A) and component (B).
(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)

**4.** (amended) A mesoporous silica shell derived from the following component (A) and component (B).

(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)

**5.** (amended) A production method of a mesoporous silica complex comprising mixing the following component (A) and component (B) under neutral conditions in water or in a mixed solvent of water-compatible organic solvent and water.

(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)

**6.** The production method of a mesoporous silica complex according to claim 5, wherein the $R^1$ in the water-soluble silicate monomer (B) is any one selected from the group consisting of an ethylene glycol residue, propylene glycol residue, butylene glycol residue, glycerin residue, and the residue of condensation products of ethylene glycol, propylene glycol, butylene glycol, and glycerin.

**7.** A production method of a mesoporous silica shell comprising, removing of the nonionic surfactant of the component (A) from the mesoporous silica complex obtained by the production method according to claim 5 by washing with an acidic aqueous solution, water, water-compatible organic solvent, or its aqueous solution.

**8.** A production method of a mesoporous silica comprising, calcinating of the mesoporous silica complex obtained by the production method according to claim 5 or the mesoporous silica shell obtained by the production method according to claim 7.

9.  (deleted)

10. (amended) A sheet-like mesoporous silica, wherein the long side (a), short side (b) and thickness (c) satisfy the following equations (1) to (3).

$$c < 50\ nm \qquad (1)$$

$$b/c > 3 \qquad (2)$$

$$a/b \geqq 1 \qquad (3)$$

11. (amended) The sheet-like mesoporous silica according to claim 10, wherein the crystal structure is a ribbon phase (R1 phase) or a nematic phase.

**Statement under Art. 19.1 PCT**

Regarding claim 3 to 5, the claims were amended as being clear that the "component (A) and component (B)" correspond with the

"(A) Nonionic surfactant
(B) Water-soluble silicate monomer represented by the following general formula (1)

$$Si\text{-}(OR^1)_4 \qquad (1)$$

(In the formula, $R^1$ represents a polyhydric alcohol residue.)".

Regarding claim 9, the claim was deleted.
Regarding claim 10, the claim was amended to become independent claim form. Regarding claim 11, the description of cited claim in the claim was amended.

FIG.1

20 nm

Fig. 2

Fig. 3

100n

Fig. 4

FIG.5

$\alpha$ /nm-1

Fig. 6

| Method | (a／b) |
|--------|-------|
| TEM | 0. 43 |
| SAXS | 0. 41 |

Fig. 7

Fig. 8

Fig. 9

20 nm

Fig. 10

20 nm

Fig. 11

## INTERNATIONAL SEARCH REPORT

| International application No. |
| --- |
| PCT/JP2006/315949 |

**A. CLASSIFICATION OF SUBJECT MATTER**
*C01B37/02*(2006.01)i, *C01B33/12*(2006.01)i

According to International Patent Classification (IPC) or to both national classification and IPC

**B. FIELDS SEARCHED**

Minimum documentation searched (classification system followed by classification symbols)
C01B37/02, C01B33/12

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2003-335516 A (Zaidan Hojin Japan Fine Ceramics Center), 25 November, 2003 (25.11.03), Claims; examples; Par. No. [0019] (Family: none) | 9,10 |
| A | JP 9-227116 A (Director General, Agency of Industrial Science and Technology), 02 September, 1997 (02.09.97), Claims; examples; Fig. 2 (Family: none) | 1-11 |
| A | JP 11-100208 A (Shiseido Co., Ltd.), 13 April, 1999 (13.04.99), Claims; examples & US 2002/0051802 A1 & EP 0872447 A1 & WO 1998/014399 A1 | 1-11 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 November, 2006 (06.11.06) | 28 November, 2006 (28.11.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/315949

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-35313 A  (Asahi Chemical Industry Co., Ltd.), 09 February, 1999 (09.02.99), Claims; examples & US 6448331 B1 | 1-11 |
| P,A | JP 2006-151799 A  (National Institute of Advanced Industrial Science and Technology), 15 June, 2006 (15.06.06), Claims; examples; comparative examples; drawings (Family: none) | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005234777 A
- JP 2005344421 A
- JP 2001261326 A


**Non-patent literature cited in the description**

- **TATSUMI et al.** *Materials Integration,* 2000, vol. 10 (13), 50
- **HUO et al.** *Chem. Mater.,* 1994, vol. 6, 1176-1191
- **HIRONOBU KUNIEDA et al.** Newest Functions of Surfactants and Amphipathic Polymers. CMC Co., Ltd, June 2005
- **TERASAKI.** Mesoporous and Related Nano-Structured Materials. Elsevier, 2004
- **NAITOU et al.** *J. Oleo Sci.,* 2005, vol. 54, 7-13